# EUROPEAN PATENT APPLICATION

(11) **EP 2 781 784 A1**
(43) Date of publication of application: **24.09.2014**
(21) Application number: 13160502.4
(22) Date of filing: 21.03.2013
(51) Int. Cl.: F16D 69/02, F16D 65/12

(54) **Carbon fibre reinforced brake discs**

(71) Applicant: Brembo SGL Carbon Ceramic Brakes GmbH, 86405 Meitingen (DE)
(72) Inventor: Reichardt, Fabian, 86152 Augsburg (DE); 0rlandi, Marco, 20831 Seregno (IT); Kienzle, Andreas, Dr., 86753 Möttingen (DE); Krätschmer, Ingrid, 86485 Biberbach (DE); Wolfermann, Sascha, 86316 Friedberg (DE)

(57) **Abstract**

A process of manufacturing a brake disc assembly comprising preparing a layered structure, applying a pressure treatment to the layered structure, and carbonising and siliconising the layered structure in order to obtain the brake disc ring. Preparing the layered structure comprises preparing a carrier body having an interface portion, the interface portion having a first density and a surface region, increasing a smoothness of the surface region and/or increasing a density of the interface portion by applying a primer layer to the surface region, applying a bonding layer to the surface region, and applying a friction layer to the bonding layer. A brake disc ring, comprising a carrier body, a bonding layer distributed substantially uniformly over at least a part of a surface region of the carrier body, and a friction layer. The carrier body comprises an interface portion with a higher density that that of a core portion of the carrier body.

## Description

### Field of the Invention

The invention relates to carbon fibre-reinforced carbon composites (C/C) and carbon fibre-reinforced ceramic composites (C/SiC). In particular, the invention relates to brake discs for motor vehicles and a process for producing friction discs from these composites, where these friction discs comprise the fibre-reinforced carbon or ceramic composites, in particular those which are reinforced with short cut carbon fibres, especially short cut carbon fibre C/SiC core material (carbon fibre-reinforced materials whose matrix comprises carbon (C), silicon (Si), and/or silicon carbide (SiC)) and a ceramic friction layer comprising predominantly SiC and Si phases.

### Background of the Invention

Disc brakes slow rotation of a rotating body by means of friction caused by pushing brake pads against a brake disc, typically using a set of callipers. Rotational energy is converted into heat through the friction occurring between brake pads and the brake disc. The brake disc assembly takes up the heat that is generated in this process, whereas most of the heat is dissipated by means of the brake disc, which can be an internally vented disc comprising ventilation channels. A brake disc assembly generally comprises a brake disc ring coupled to a bell. A brake disc ring typically comprises a carrier body as well as friction layers as the outermost layers on either side of the carrier body, designed to be contacted by the brake pads in order to generate friction.

In use, the brake disc assembly is subject to different stresses and strains, including mechanical, thermo-mechanical, chemical, and other types of stresses. When used in motor vehicles, a brake disc assembly can be subject to a particular set of stresses during wintry conditions. Such conditions can entail very low environmental temperatures of, for example, down to -25°C or less. Further, such conditions can entail the use of certain chemical compounds including salts (e.g. NaCl, CaCl₂) in the deicing of roads. Typically, these chemical compounds lower the melting point of snow and ice, resulting in a watery mixture that remains on the roads instead of packed snow and/or ice. Consequently, motor vehicles and individual components thereof are often subjected at low temperatures to a watery mixture including the aforementioned chemical compounds.

C/C or C/SiC brake discs including friction layers can exhibit friction layer delamination (FLD) in which the friction layer separates partly from the carrier body. FLD can occur, in particular, when the brake disc is subjected to thermo-mechanical stresses in wintry conditions. When FLD happens, delamination occurs at the interface between the carrier body and the friction layer, typically within the uppermost layer of the carrier body.

Tribological properties of brake discs can be analysed and tested using the AK-Master procedure (see ISO/TC22/SC2 N557). The AK-Master procedure includes a series of defined braking cycles designed to measure and document tribological characteristics of brakes.

The resistance of a brake disc to FLD can be measured by a so-called SNK-Test (salt-wet-cold test), which is based on the AK-Master procedure. Prior to and during the different braking cycles of the AK-Master procedure, the brake disc is treated with a solution consisting of 3.0 wt% NaCl and 0.4 wt% CaCl₂. Additionally, after bedding and after the first pressure line, the brake disc is cooled down to between -20°C and -25°C for 30 minutes using liquid nitrogen. In order to measure the resistance to FLD, the procedure is repeated until delamination occurs, whereas the number of cycles required to achieve delamination denotes the performance of the brake disc.

In general, a production process for carbon-ceramic (C/SiC) brake discs includes preparation of a fibre mixture, production of the brake disc ring, mounting of the brake disc bell to the brake disc ring and final machining of the assembled brake disc. The ceramic brake disc ring can be produced by compressing a preform with a binding resin to create a green body. This green body is converted into the ceramic component in at least two successive high-temperature treatment processes, namely carbonisation and siliconisation. After carbonisation, the intermediate product can be referred to as carbonised body. After siliconisation, the intermediate product can be referred to as ceramic body. Generally, the ceramic body can be referred to as brake disc ring, before or after machining (e.g., before or after grinding of the ceramic body).

The production process for carbon-carbon (C/C) brake discs comprises, instead of the above-described carbonisation/siliconisation for C/SiC materials, a series of carbonisation steps or processes, in which the respective intermediate product (e.g., the green body or the carbonised body) is successively more and more densified using carbonisation with a suitable resin.

The base material used for brake disc production can be a mixture of short fibres impregnated with synthetic resin. The specific formulation of the base materials varies according to the component to be produced, for example a carrier body (or disc body), friction layers, or wear indicators. Specific fractions of carbon fibre sections, i.e. short fibres of defined length, are intermixed and blended with resin, the proportions depending on the formulation used.

First, hot pressing is used to produce a carbon fibre-reinforced plastic preform (CFRP), i.e. a CFRP green body. The applied moulding pressure densifies the base materials in a moulding die. The resin hardens under the effect of heat into a cross-linked plastic, thus acting as a binder. To manufacture a brake disc body, a plastic core is placed inside the die to act as a negative maid for producing the cooling vanes. The carrier body obtained is provided with friction layers and/or wear indicators to produce a complete "green" brake disc ring. Compression moulding is followed by machining with standard machine tools.

The CFRP green body is coked at around 900°C in an air-free environment. Pyrolysis converts the plastic matrix of the green body into elemental carbon, which is why the process is referred to as carbonisation. The component yielded by carbonisation is a carbon fibre-reinforced carbon (C/C) carbonised body. During thermal treatment, the plastic cores employed are burned without residues to produce cooling vanes - if the carrier body comprises cooling vanes. The resin used as a binder is converted into carbon. The carbonised "green" brake disc ring is then machined to close to the desired final contours.

Alternatively, the CFRP is carbonised first (see above) and subsequently combined, for example, with friction layers and wear indicators. In this case, each friction layer is attached to the carrier body by application of a corresponding bonding layer (e.g. a layer of an adhesive compound) and subsequent application of the friction layers to the bonding layers. The resulting body is then subjected to an additional (second) carbonisation.

To produce silicon carbide from carbon and silicon, a Liquid Silicon Infiltration (LSI) process can be used. In this process, the carbon matrix of the C/C carbonised body is infiltrated with liquid silicon to convert it into silicon carbide. The process is carried out discontinuously at around 1700°C under high vacuum. The silicon melt is of low viscosity and easily penetrates the open-pore matrix of the C/C body. It reacts with the carbon of both the fibre coating and the converted binding resin to form the silicon carbide matrix. The carbon fibres remain unaffected by the siliconising process because their in situ coating prevents them from reacting with the silicon. Free silicon that has not reacted with carbon is the second matrix component.

After siliconisation, the ceramic (C/SiC) brake disc rings are machined with standard machine tools. The same applies to carbon (C/C) brake disc rings after the series of carbonisation steps. Also in this process the necessary holes for mounting the disc bell are drilled around the inner edge of the disc rings. As a final step, the brake disc rings are impregnated with an anti-oxidation agent to prolong service life.

At this stage, the brake disc ring and brake disc bell are assembled to form the brake disc. Slide bushes and screws are used for mounting the disc bell onto the ring under controlled torque and twist angle conditions. Any side run out in the assembled brake disc is first eliminated by suitably machining, after which the brake disc is balanced by trimming excess material from its outer edge. To complete the production process, the carbon-ceramic brake disc then undergoes final inspection and testing.

### Summary of the Invention

According to the invention, there is provided a process of manufacturing a brake disc assembly comprising the steps of preparing a layered structure, applying a pressure treatment to the layered structure, and carbonising and siliconising the layered structure in order to obtain the brake disc ring. Preparing the layered structure comprises preparing a carrier body having an interface portion, the interface portion having a first density and a surface region, increasing a smoothness of the surface region and/or increasing a density of the interface portion by applying a primer layer to the surface region, applying a bonding layer to the surface region, and applying a friction layer to the bonding layer.

In one aspect, preparing the carrier body comprises the steps of preparing a mixture of carbon fibres and resin, subjecting the mixture to a first pressure treatment to form a green body, carbonizing the green body to form the carrier body, and machining the carrier body.

In another aspect, the pressure treatment comprises subjecting the layered structure to a treatment pressure of 100 bar to 200 bar at a treatment temperature of 100°C to 200°C for a treatment time of 5 minutes to 30 minutes. In a preferred aspect, the treatment pressure is 150 bar, the treatment temperature is 150°C, and the treatment time is 10 minutes.

In another aspect, the surface region comprises first and second surfaces arranged parallel to one another on opposite sides of the carrier body, optionally wherein the first and second surfaces are each substantially planar and/or ring-shaped.

In another aspect, at application, the bonding layer comprises a resin binder, ceramic powder, and/or carbon fibres.

In another aspect, the step of applying the primer layer comprises applying a liquid primer having a first viscosity, optionally wherein the step of applying the bonding layer comprises applying a liquid adhesive having a second viscosity, and wherein the first viscosity is lower than the second viscosity.

In another aspect, the first viscosity is configured to allow for ingression of a portion of the liquid primer into the interface portion of the carrier body of up to 500 µm. Optionally, the liquid primer is configured to allow for ingression into the interface portion of 50 µm to 500 µm. In a preferred aspect, the ingression is between 100 µm and 500 µm. In another preferred aspect, the ingression is between 150 µm and 500 µm.

In another aspect, the step of applying the bonding layer is preceded by a step of drying the primer layer, optionally wherein the step of drying the primer layer comprises one or more of thermal treatment, chemical treatment, UV radiation treatment, electron-beam radiation treatment.

In another aspect, the primer layer has a thickness of 10 µm to 300 µm after the step of drying, the thickness of the primer layer being measured between a contact surface of the primary layer and an opposite outer surface of the primary layer, the contact surface of the primary layer facing the surface region of the carrier body.

In another aspect, the step of applying the primer layer comprises applying the liquid primer by one or more of brushing, spraying, dipping, and rolling.

In another aspect, at application, the primer layer comprises a mixture of a ceramic powder and a resin.

In another aspect, the primer layer comprises an oxide coating, the oxide coating optionally comprising one or more of mullite, alumina, calcium alumino silicate, barium alumino silicate, barium strontium alumino silicate.

In another aspect, the primer layer further or alternatively comprises an non-oxide coating, the non-oxide coating optionally comprising one of SiC, Si, TiB2, and BC4.

In another aspect, the primer layer further or alternatively a sol gel coating, the sol gel coating optionally being based on a precursor comprising an alkoxide, the alkoxide further optionally comprising one of Si(OR)4, Ti(OR)4, Zr(OR)4, and Al(OR)4.

In another aspect, the primer layer further or alternatively a pre-ceramic polymer coating, the pre-ceramic polymer coating optionally comprising one or more of siloxane, silazane, and silane.

In another aspect, the friction layer comprises Si, SiC, and/or carbon fibres.

In another aspect, there is provided a brake disc ring obtainable by the process described above. In one aspect, in the brake disc ring the carrier body further comprises a core portion that has a density that is lower than the density of the interface portion. Further, the bonding layer is distributed substantially uniformly over at least a part of the surface region of the interface portion.

According to the invention, there is provided a brake disc ring, comprising a carrier body, a bonding layer, and a friction layer. The carrier body comprises an interface portion having a first density and a core portion having a second density, the interface portion comprising a surface region, the first density being higher than the second density. Further, the bonding layer is distributed substantially uniformly over at least a part of the surface region.

In another aspect, the interface portion has a thickness of between 50µm to 500µm. In a preferred aspect, the interface portion has a thickness of between 100µm to 500µm. In another preferred aspect, the interface portion has a thickness of between 150µm to 500µm.

In another aspect, the bonding layer has a thickness of between 200µm and 500µm.

In another aspect, the bonding layer comprises carbon fibres, Si, SiC, and/or C.

In another aspect, the surface region comprises first and second surfaces arranged parallel to one another on opposite sides of the carrier body, optionally wherein the first and second surfaces are each substantially planar and ring-shaped.

In another aspect, the friction layer has a thickness of up to 1.5 mm.

Advantages of the inventive process and brake disc assembly include that the connection between the carrier body and the friction layer is improved due to the formation of a substantially homogeneous and continuous bonding layer by means of a primer layer being applied to the carrier body, thereby increasing the smoothness of the carrier body. Further, an uppermost interface portion of the carrier body is densified due to the partial ingression of the material of the primer layer into the carrier body.

### Brief Description of the Drawings

FIG. 1 shows steps of a known process for manufacturing carbon ceramic brake discs;

FIG. 2 is an isometric view of a brake disc assembly;

FIG. 3 shows a cross-section of a brake disc ring, with the rotation axis of the ring located in the plane of the cross-section;

FIG. 4 shows an exemplary brake disc assembly exhibiting friction layer delamination (FLD) after being subjected to a number of SNK-Test cycles;

FIG. 5 shows steps of a process for manufacturing carbon ceramic brake discs in accordance with the invention;

FIG. 6 shows a cross section of different layers of a brake disc;

FIG. 7 shows a cross section of different layers of a brake disc in accordance with the invention;

FIG. 8a shows a cross section of different layers of a brake disc;

FIG. 8b shows a magnified cross section of FIG. 8a;

FIG. 9a shows a cross section of different layers of a brake disc in accordance with the invention;

FIG. 9b shows a magnified cross section of FIG. 9a.

### Detailed Description of the Invention

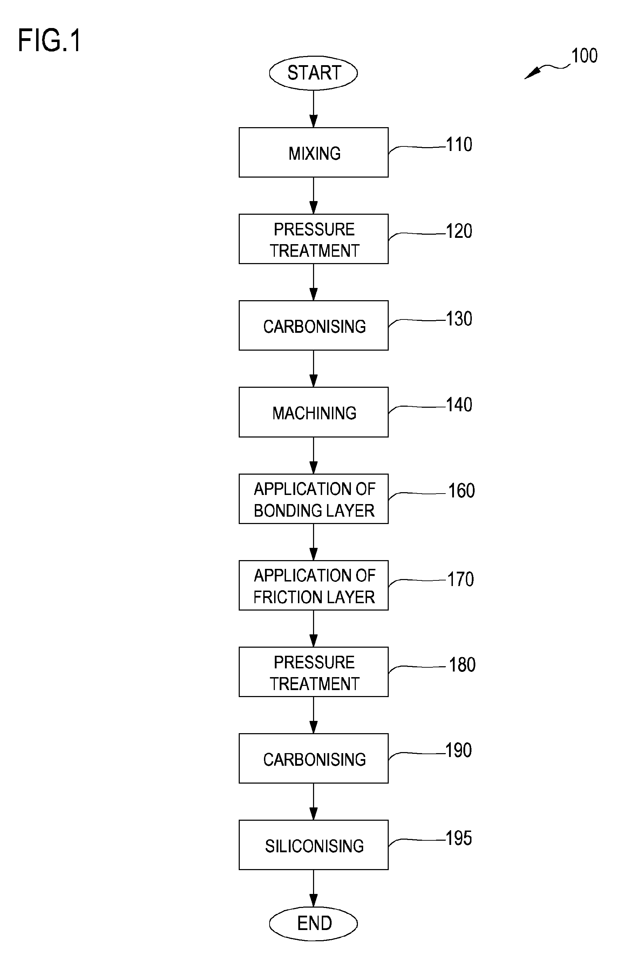

FIG. 1 shows steps of a known process 100 for manufacturing carbon (ceramic) brake discs.

The process includes mixing 110 of carbon fibres and resin, hot pressing 120 of the mixture, carbonising 130, machining 140, application of a bonding layer or layers 160, application of a friction layer or layers 170, pressure treatment 180, carbonisation 190, and siliconising 195. In case of the manufacture of C/C brake disc rings, the step of siliconising 195 is replaced by a series of one or more further resin impregnating and carbonising steps.

In detail, a carrier body is obtained in steps 110 through 130. A green body is obtained by mixing 110 a resin binder and carbon fibres, followed by subjecting the mixture to pressure treatment and hardening 120. The green body is then carbonised in order to obtain a carrier body substantially consisting of carbon fibres embedded in a porous carbon matrix (CFC). The carrier body does not contain substantial amounts of resin after carbonisation.

Subsequently, the carrier body undergoes machining 140, in which step each of the surfaces designed to later receive a bonding layer and a friction layer are machined to be plane-parallel with respect to each other.

A bonding layer is then applied 160 to the machined carrier body and the friction layers are arranged on the respective bonding layers. The bonding layer can comprise a resin binder, ceramic powder, and/or carbon fibres.. The friction layers can comprise carbon fibres (CF), SiC, Si, and/or carbon (C).

The friction layer is applied 170 and the layered structure undergoes a pressure treatment 180 at a certain temperature and pressure for a specified amount of time. The layered structure is then carbonised 190 and siliconised 195.

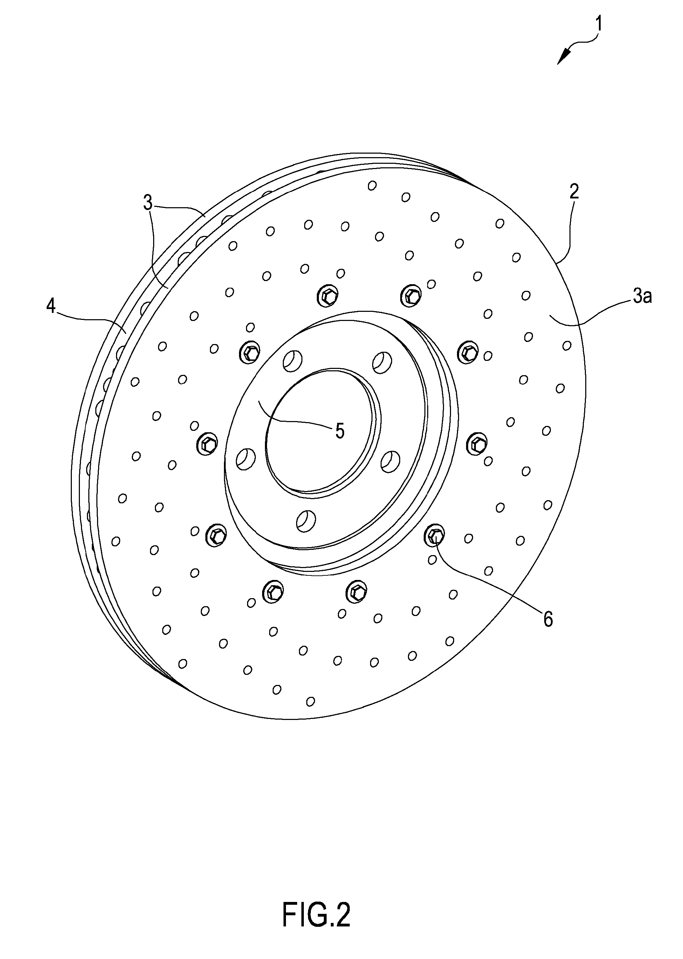

FIG. 2 is an isometric view of an exemplary brake disc assembly 1. Brake disc assembly 1 comprises a brake disc ring 2 and a bell 5, whereas the bell 5 is coupled to the brake disc ring 2 by screws and bushes 6. In this example, brake disc ring 2 comprises spaced-apart disc rings 3 fixedly coupled in a parallel configuration and having a ventilation section 4 defined there between. A ventilation section 4 is optional. Alternatively, a single solid brake disc ring 3 could be present. The brake disc ring or rings 3 each carry a friction layer 3a on opposite side of the brake disc assembly.

It is understood that brake disc assembly 1 and/or brake disc ring 2 can have a different shape and configuration. For example, bell 5 can have a multitude of shapes, depending on the individual use. Further, connection means for attaching brake disc ring 2 to bell 5 can vary greatly. In some examples, screws and bushes 6 are used. In other examples, additional springs are use to achieve a floating system. Similarly, the ventilation section and perforation of the brake disc ring can be designed differently. In some examples, the rings do not have ventilation and/or perforation.

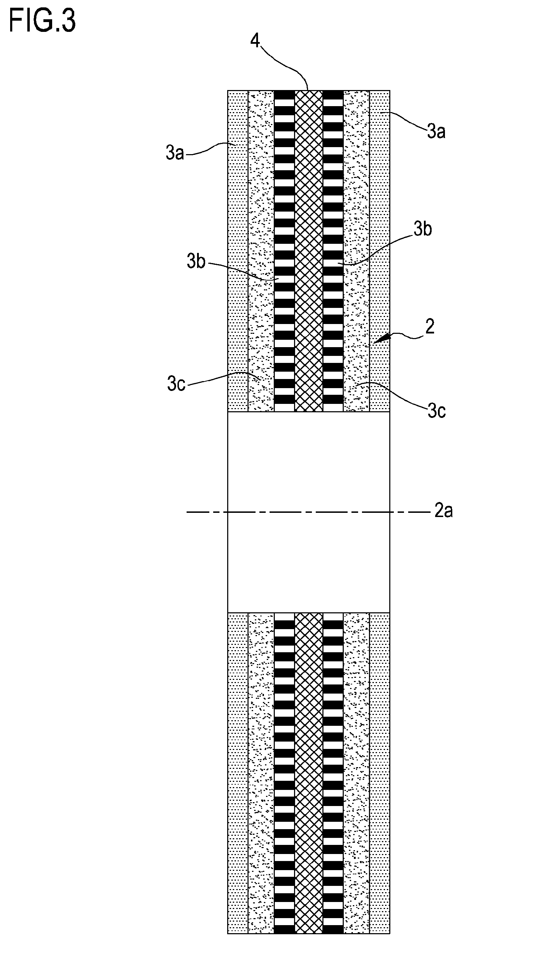

FIG. 3 shows a cross-section of a brake disc ring 2, where the rotation axis 2a of the ring is located in the plane of the cross-section (i.e. the direction of view is perpendicular to the rotation axis 2a of the brake disc ring 2). In this embodiment, brake disc ring 2 comprises friction layers 3a, bonding layers 3c, and a carrier body 3b including a ventilation layer 4. The bonding layers 3c are arranged between the friction layers 3a and the carrier body 3b. FIG. 3, in particular, is not to scale but shows a schematic overview of the structural concept of an exemplary brake disc ring 2. For example, friction layers 3a are typically much thinner than shown in FIG. 3. However, for illustration purposes the different layers have been reduced or enlarged in size and are not to scale.

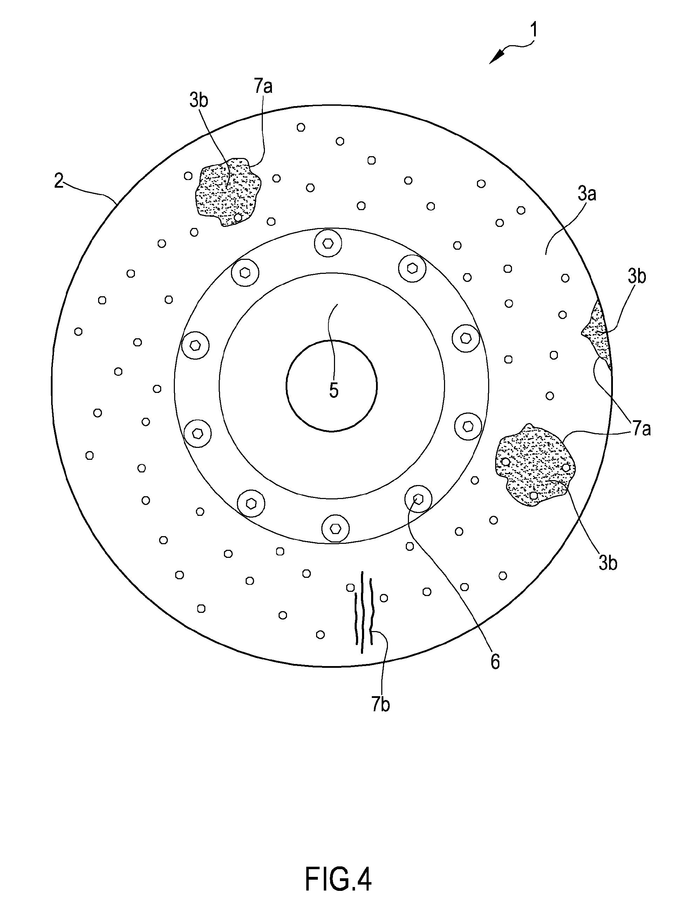

C/C or C/SiC brake discs having friction layers such as shown in FIGs. 3 and 4, can exhibit friction layer delamination (FLD) in which the friction layer 3a partly separates from the carrier body 3b. FLD can occur, in particular, when the brake disc is subjected to thermo-mechanical and/or chemical stresses that motor vehicles are typically subjected to in wintry conditions. When FLD happens, delamination occurs at the interface between the carrier body 3b and the friction layer 3a, typically within the uppermost region of the carrier body, i.e. parts of the carrier body on the surface of the carrier body break away.

Conditions, in which FLD typically appears, can be simulated using the so-called SNK-Test (salt-wet-cold test), that is based on the AK-Master procedure, which includes a series of defined braking cycles designed to measure and document tribological characteristics of brakes (see ISO/TC22/SC2 N557). In the SNK-Test, prior to and during the different braking cycles of the AK-Master procedure, the brake disc is treated with a solution consisting of 3.0 wt% NaCl and 0.4 wt% CaCl₂. Additionally, after bedding and after the first pressure line, the brake disc is cooled down to between -20°C and -25°C for 30 minutes using liquid nitrogen. In order to measure the resistance to FLD, the procedure is repeated until delamination occurs, whereas the number of cycles required to achieve delamination denotes the performance of the brake disc. Thus, resistance to FLD can be measured by the number of SNK-Test cycles a brake disc assembly can undergo until FLD occurs.

FIG. 4 shows an exemplary brake disc assembly 1 exhibiting FLD after being subjected to a number of SNK-Test cycles. As can be seen from FIG. 4, the friction layer 3a exhibits sections 7a, which have separated from the carrier body 3b. Due to the applied stresses, the structural integrity of the bonding between friction layer 3a and carrier body 3b has been compromised and the sections 7a of the friction layer 3a, that have separated from the carrier body 3b, have been worn away. At these sections 7a, the outer surface of the carrier body 3b is exposed.

Apart from the aforementioned delaminated sections 7a that can expose entire areas of the carrier body, FLD fracture patterns can have other shapes or forms. For example, FLD defects can also appear as both larger and smaller fractures 7b including very fine hairline cracks (not shown).

It has been found that the application of a primer to the carrier body facilitates partial ingress of the primer into the porous structure of the carrier body, resulting in a higher density in the portion of the carrier body that has been infiltrated by the primer. Further, the primer layer increases the smoothness and homogeneity of the surface region of the carrier body, which the primer is applied to.

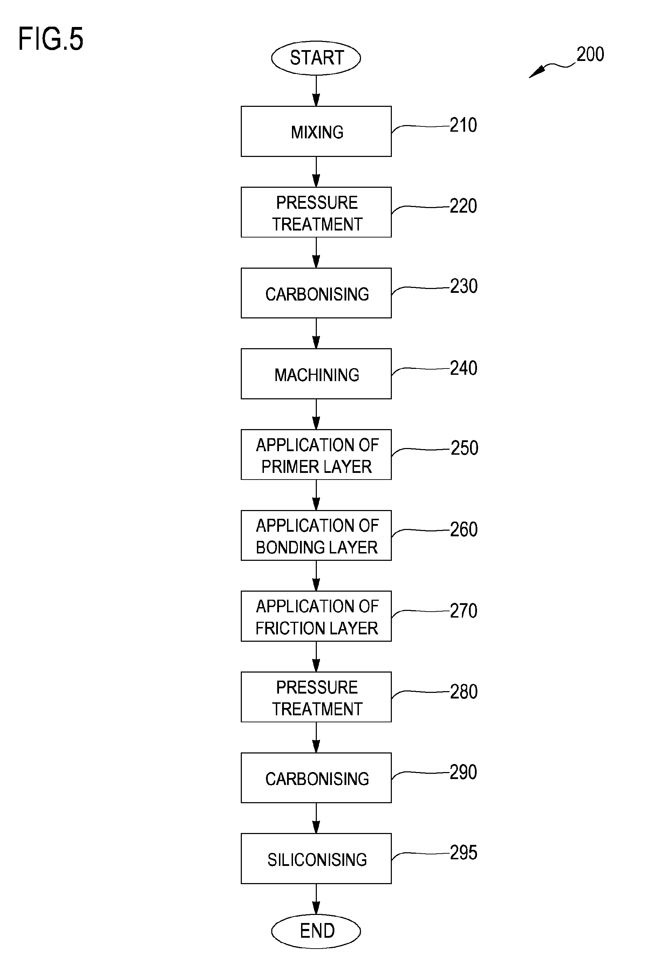

FIG. 5 shows steps of a process 200 for manufacturing carbon ceramic brake discs in accordance with the invention. The process 200 includes mixing 210 of carbon fibres and resin, hot pressing 220 of the mixture, carbonising 230, machining 240, application of a primer layer 250, application of a bonding layer 260, application of a friction layer 270, pressure treatment 280, carbonisation 290, and siliconisation 295. In case of the manufacture of C/C brake disc rings, the step of siliconising 295 is replaced by a series of one or more further resin impregnating and carbonising steps. Process steps 210, 220, 230, 240, 260, 270, 280, 290, and 295 of process 200 substantially correspond respectively to process steps 110, 120, 130, 140, 160, 170, 180, 190, and 195 of known process 100 as shown in FIG. 1. It is understood that any step of applying a layer refers to one side of the brake disc ring and can include application of the layer on either or both sides.

In detail, a carrier body is obtained in steps 210 through 230. A green body is obtained by mixing 210 a resin binder and carbon fibres, followed by subjecting the mixture to pressure treatment and hardening 220. The green body is then carbonised 230 in order to obtain a carrier body substantially consisting of carbon fibres embedded in a porous carbon matrix (CFC). The carrier body does not contain substantial amounts of resin after carbonisation.

Subsequently, the carrier body undergoes machining 240, in which step each of the surfaces designed to later receive a bonding layer and a friction layer are machined to be plane-parallel with respect to each other.

At step 250, a primer layer is applied to the machined carrier body. The primer layer can be applied by any suitable method. Liquid primers, for example, can be applied using any suitable method including brushing, spraying, dipping, or rolling. The material of the primer layer can be configured to facilitate an ingression into the interface portion of the carrier body of up to 500 µm. It is clear to the skilled person that a number of properties of the material for the primer layer influence this process. These properties include, but are not limited to, chemical composition, type and amount of solvent used, viscosity, and others.

For example, the ingression (e.g., rate of ingression and/or depth of ingression) can be influenced by the viscosity of the primer. A higher viscosity of the material of the primer layer generally leads to a lesser ingression of primer into the carrier body. Similarly, the ingression can be increased by a lower viscosity of the primer. Viscosity of the primer can be modified by a number of factors, for example, amount and type of solvent used, composition of the suspension or colloid, application temperature, and others. Further, the ingression depends upon the porosity of the material of the carrier body. In case of a more porous material, ingression is increased while in case of a less porous material, ingression is decreased.

Depending upon the individual composition of the primer layer, a drying step 255 (not shown) may be applied preceding the application 260 of the bonding layer. The drying step 255 can be achieved by use of any suitable method, including temperature treatment, chemical treatment (e.g. to initiate cross-linking), UV-radiation treatment, or electron beam radiation treatment. Before and/or after drying, the primer layer can have a thickness of between 10 µm and 300 µm, not including the portion of the carrier body that has been infiltrated by the primer. In other words, the thickness of the primer layer is defined as the thickness of the primer between the surface of the carrier body and an uppermost surface of the primer layer. The portion of the primer layer that has infiltrated the carrier body is not taken into account here.

A bonding layer is then applied 260 to the machined carrier body and the friction layers are arranged on the respective bonding layers. The bonding layer can comprise a resin binder, ceramic powder, and/or carbon fibres.. The friction layers can comprise carbon fibres (CF), SiC, Si, and/or carbon (C).

The friction layer is applied 270 and the layered structure undergoes a pressure treatment 280 at a certain temperature and pressure for a specified amount of time. The pressure treatment 280 can comprise subjecting the layered structure to a treatment pressure of 100 bar to 200 bar at a treatment temperature of 100°C to 200°C for a treatment time of 5 minutes to 30 minutes. In one preferred embodiment, the treatment pressure is 150 bar, the treatment temperature is 150°C, and the treatment time is 10 minutes. Subsequently, the layered structure is carbonised 290 and siliconised 295.

As set forth above, it has been found that FLD resistance can be improved by application of a primer on the machined carrier body 3b before the application of the bonding layer.

In detail, the carrier body consists of carbon fibres embedded in a porous carbon matrix. After machining 240, the surface region of the carrier body includes substantially plane-parallel surfaces designed to receive the bonding layers and the friction layers. However, the surface itself is still a porous structure.

It has been found that an increase in the density of the interface portion of the carrier body and an improvement in smoothness and homogeneity of the surface region of the carrier body can be achieved by the application of a primer layer after machining 240 of the carrier body and before the application 260 of the bonding layer. The application of a primer to the carrier body facilitates partial ingression of the primer into the porous structure of the carrier body and provides the carrier layer with a smoother and more homogeneous surface region. In this manner, an interface portion of the carrier body is defined, which comprises the outermost portion of the carrier body including the surface region, whereas the interface portion can have a thickness of up to 500 µm measured from the surface into the carrier body. In other words, the carrier body comprises a core portion and an interface portion, whereas the core portion has a lower density than the interface portion, and whereas the interface portion has a thickness of up to 500 µm an comprises two opposite ring-shaped surfaces of the carrier body.

The primer layer can comprise one or more of a broad range of materials that are suitable with respect to the production process. In general, the primer layer comprises a mixture of a ceramic powder and a resin. In particular, the primer layer can comprise an oxide or non-oxide coating. An oxide coating can comprise one or more of mullite, alumina, calcium alumino silicate, barium alumino silicate, barium strontium alumino silicate. A non-oxide coating can comprise SiC, Si, TiB₂, or BC₄.

Alternatively or in addition, the primer layer can comprise a sol gel coating, for example being based on a precursor comprising an alkoxide. The alkoxide can comprise, for example, Si(OR)₄, Ti(OR)₄, Zr(OR)₄, and Al(OR)₄. Alternatively or in addition, the primer layer can comprise a pre-ceramic polymer coating, for example comprising one or more of siloxane, silazane, and silane.

The primer can be in liquid state or be brought in solution prior to application using a suitable solvent. Further, the primer can be a suspension or colloid comprising a fluid and solid particles. The primer can also be in a different state (e.g., solid, in form of a powder) and become liquid during the pressure treatment step 280 (see FIG. 5). In one preferred embodiment, the primer comprises a binding resin and a ceramic powder and the bonding layer comprises a binding resin, a ceramic powder, and/or carbon fibres. Optionally, the bonding layer comprises a liquid adhesive, whereas the primer has a viscosity that is lower than the viscosity of the adhesive of the bonding layer.

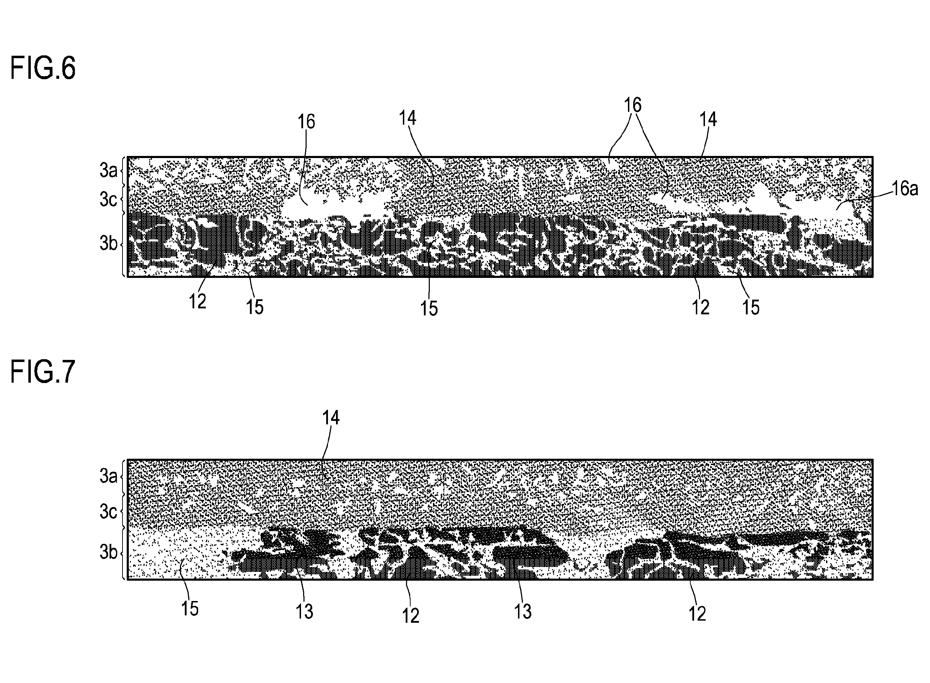

FIG. 6 shows a cross section of the different portions and layers of a brake disc made according to known process 100 as shown in FIG. 1. The carrier body 3b comprises a surface region in contact with the bonding layer 3c. The bonding layer 3c is arranged between the interface portion of the carrier body 3b and the friction layer 3a.

As can be seen from FIG. 6, the carrier body 3b comprises a substantially homogeneous distribution of carbon fibres 12 and Si/SiC 15. The Si/SiC 15 comprises both Si 16 and SiC 14, whereas in larger patches, the center generally comprises mostly Si 16 and whereas close to and surrounding carbon fibres and carbon fibre bundles, there is predominantly SiC 14. The bonding layer 3c comprises substantially pure SiC 14 and Si 16. It is noted that the bonding layer 3c comprises also larger portions 16a consisting of pure Si 16. Further, the friction layer comprises a substantially homogeneous distribution of SiC 14 and Si 16. Upon pressure treatment 180, the material of the bonding layer is spread over the surface of the carrier body 3b. However, due to the surface characteristics of the carrier body 3b and the properties of the material of the bonding layer 3c, the latter does not spread homogeneously and continuously over the entire surface region of the carrier body 3b. Thus, cavities remain, which are subsequently filled by Si in the liquid Si infiltration process, resulting in the aforementioned larger patches 16a of pure Si 16.

FIG. 7 shows a cross section of different layers of a brake disc made according to process 200 as shown in FIG. 5. The carrier body 3b comprises an interface portion at its outermost surface. The interface portion has a thickness of up to 500 µm and comprises a surface region in contact with the bonding layer 3c. The bonding layer 3c has a thickness of between 200 µm and 500 µm and is arranged between the interface portion of the carrier body 3b and the friction layer 3a. The friction layer preferably has a thickness of up to 1.5 mm.

As can be seen from FIG. 7, the bonding layer 3c comprises substantially SiC 14 and Si 16. In contrast to bonding layer 3c as shown in FIG. 6, the bonding layer 3c shown in FIG. 7 comprises a substantially homogeneous and continuous distribution of SiC 14 and Si 16, without a formation of any larger patches of pure Si 16. The friction layer comprises a substantially homogeneous distribution of SiC 14 and Si 16 as well as small amounts of carbon.

As can be seen from a comparison between FIGs. 6 and 7, the application of a primer leads to a densification of the interface portion of the carrier body 3b in that the portion of the carrier body that defines the interface for the boding layer and which comprises the surface region, on which, by means of the boding layer, the friction layer is applied to, has a higher density than that of the remainder (i.e. the core portion) of the carrier body 3b. The interface portion comprises a substantially homogeneous distribution of densified carbon fibres 13 and Si/SiC 15. The carbon fibres 12 and 13 as shown in FIG. 7 are coated with Si/SiC 15. Additionally, the uppermost portion of the carrier body 3b is also compacted by pure carbon. The structure as shown in FIG. 7 has, in the interface portion of carrier body 3b, a higher density, which leads to a reduced accessibility to salt water.

Further, the primer layer can fill cavities of the porous carrier body, thereby providing a surface of increased smoothness. As a result, the material of the bonding layer 3c can spread homogeneously over substantially the entire surface region of the carrier body 3b, such that no cavities remain.

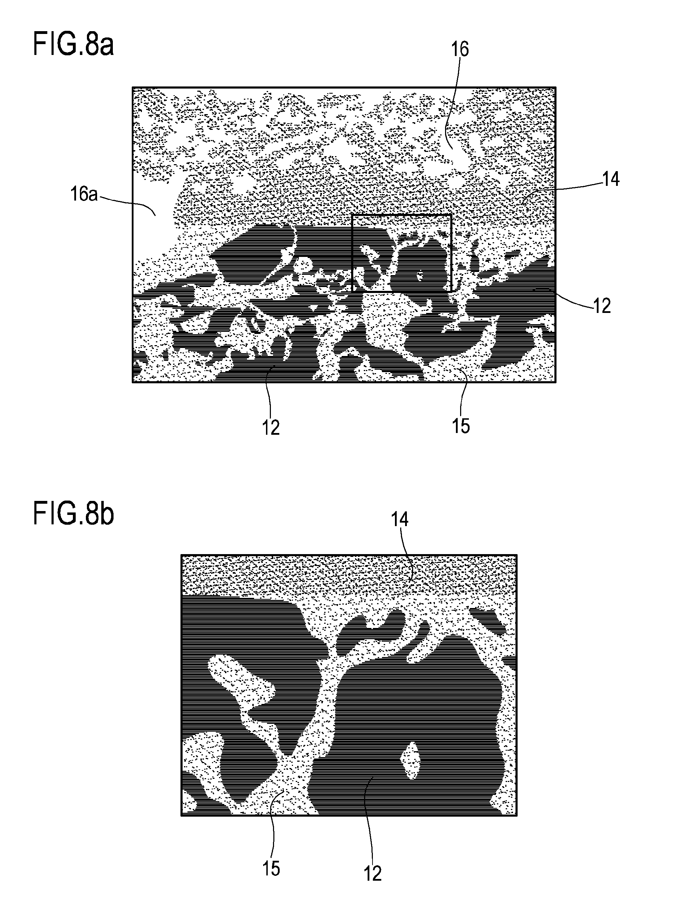

FIG. 8a shows a cross section of different layers of a brake disc made according to known process 100 as shown in FIG. 1 and FIG. 8b shows a magnified cross section of FIG. 8a. As can be seen from FIGs. 8a and 8b, the carbon fibres 12 as substantially embedded in relatively large patches of Si/SiC 15, whereas single carbon fibres can be embedded in carbon. Further, in FIG. 8a, the larger patches 16a of Si 16 extend into and through the layer of SiC 14.

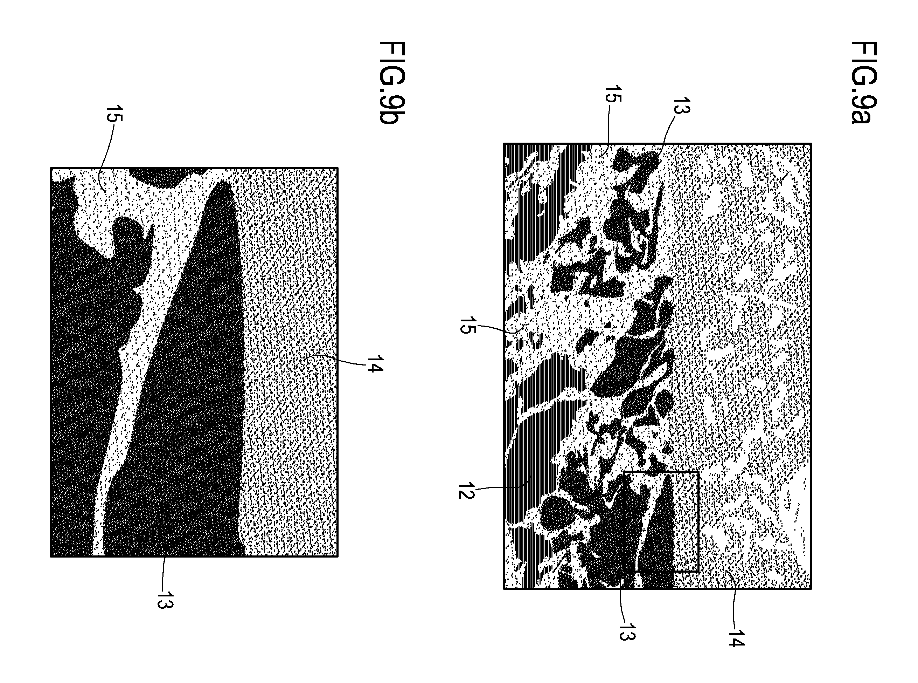

FIG. 9a shows a cross section of different layers of a brake disc made according to process 200 as shown in FIG. 5 and FIG. 9b shows a magnified cross section of FIG. 9a. As can be seen from FIG. 9a, the carrier body comprises a core portion including carbon fibres 12 and Si/SiC 15 and an interface portion including carbon fibres 13 and Si/SiC 15. The carbon fibres 12 and 13 are embedded in Si/SiC 15, whereas carbon fibres 13 are densified due to the application of the primer layer and are mostly coated with SiC 14, resulting in a densification of the interface portion as compared to the core portion of the carrier body. As described above with respect to FIGs. 8a and 8b, the Si/SiC 15 comprises both Si 16 and SiC 14, whereas in larger patches, the center generally comprises mostly Si 16 and whereas close to and surrounding carbon fibres and carbon fibre bundles, there is predominantly SiC 14.

As can be seen from FIG. 9b, carbon fibres 13 are embedded in Si/SiC 15 and the interface portion contacts the bonding layer predominantly comprising SiC 14.

The properties of the brake disc assembly made according to process 200 as shown in FIG. 5 can be measured by subjecting the brake disc assembly to a number of SNK-Test cycles. As set forth above, the SNK-Test comprises a defined program cycle including brake cycles, wetting cycles, and cooling cycles. In the braking cycles, the brake disc assembly is subjected to specific braking blocks according to the AK-Master procedure. The wetting cycles include wetting the brake discs with salt water (e.g. comprising 3.0 wt% of NaCl and 0.4 wt% of CaCl₂). The cooling cycle includes cooling the brake discs down to between -20°C to - 25°C with liquid nitrogen for a period of 30 minutes.

The SNK-Test cycle is executed repeatedly until delamination occurs. The measure of FLD performance (i.e. resistance to FLD) is equal to the number of cycles performed until delamination occurs.

In order to obtain comparable results, further parameters have to be considered, which influence the results obtained by the SNK-Tests. Such parameters include parameters pertaining to the vehicle specification including inertia and Vₘₐₓ as well as the dimensions of the brake disc. Details with respect to the overall test process are documented in the specification of the AK-Master procedure (see ISO/TC22/SC2 N557).

In one preferred embodiment, the carrier body has been treated with a primer consisting of a binding resin and a ceramic powder, leading to an improvement of between 60% to 110% compared to discs prepared without the application of the primer. In this embodiment, discs with the dimensions of 420x40mm have been tested with the parameters: Vₘₐₓ = 310 km/h and inertia = 104 kgm². The observed mean performance increased from 26 to 48 cycles

## Claims

1. A process of manufacturing a brake disc ring comprising the steps of:
preparing a layered structure comprising:
preparing a carrier body having an interface portion, the interface portion having a first density, the interface portion comprising a surface region;
increasing a smoothness of the surface region and/or increasing a density of the interface portion by applying a primer layer to the surface region;
applying a bonding layer to the surface region; and
applying a friction layer to the bonding layer;
applying a pressure treatment to the layered structure; and
carbonising and siliconising the layered structure in order to obtain the brake disc ring.

2. The process of one of claim 1, wherein the pressure treatment comprises subjecting the layered structure to a treatment pressure of 100 bar to 200 bar at a treatment temperature of 100°C to 200°C for a treatment time of 5 minutes to 30 minutes.

3. The process of one of the preceding claims, wherein, at application, the bonding layer comprises a resin binder, ceramic powder, and/or carbon fibres.

4. The process of one of the preceding claims, wherein the step of applying the primer layer comprises applying a liquid primer having a first viscosity, optionally wherein the step of applying the bonding layer comprises applying a liquid adhesive having a second viscosity, and wherein the first viscosity is lower than the second viscosity.

5. The process of claim 4, wherein the first viscosity is configured to allow for ingression of a portion of the liquid primer into the interface portion of the carrier body, optionally wherein the liquid primer is configured to allow for ingression into the interface portion of up to 500 µm, further optionally wherein the ingression is at least 50 µm.

6. The process of one of the preceding claims, wherein the step of applying the bonding layer is preceded by a step of drying the primer layer, optionally wherein the step of drying the primer layer comprises one or more of thermal treatment, chemical treatment, UV radiation treatment, electron-beam radiation treatment, and/or wherein the primer layer has a thickness of 10 µm to 300 µm after the step of drying, the thickness of the primer layer being measured between a contact surface of the primary layer and an opposite outer surface of the primary layer, the contact surface of the primary layer facing the surface region of the carrier body.

7. The process of one of the preceding claims, wherein, at application, the primer layer comprises a mixture of a ceramic powder and a resin.

8. The process of one of the preceding claims, wherein the primer layer comprises an oxide coating, the oxide coating optionally comprising one or more of mullite, alumina, calcium alumino silicate, barium alumino silicate, barium strontium alumino silicate.

9. The process of one of the preceding claims, wherein the friction layer comprises Si, SiC, and/or carbon fibres.

10. A brake disc ring, comprising:
a carrier body;
a bonding layer; and
a friction layer; wherein
the carrier body comprises an interface portion having a first density and a core portion having a second density, the interface portion comprising a surface region, the first density being higher than the second density; and
wherein
the bonding layer is distributed substantially uniformly over at least a part of the surface region.

11. The brake disc ring of the preceding claim, wherein the interface portion has a thickness of up to 500µm, optionally wherein the thickness of the interface portion is at least 50µm.

12. The brake disc ring of one of claims 10 or 11, wherein the bonding layer has a thickness of between 200µm and 500µm.

13. The brake disc ring of one of claims 10 to 12, wherein the bonding layer comprises carbon fibres, Si, SiC, and/or C.

14. The brake disc ring of one of claims 10 to 13, wherein the surface region comprises first and second surfaces arranged parallel to one another on opposite sides of the carrier body, optionally wherein the first and second surfaces are each substantially planar and ring-shaped.

15. The brake disc ring of one of claims 10 to 14, wherein the friction layer has a thickness of up to 1.5 mm.
